# EUROPEAN PATENT APPLICATION

(11) **EP 4 822 673 A1**
(43) Date of publication of application: **14.10.2026**
(21) Application number: 26170570.1
(22) Date of filing: 02.04.2026
(51) Int. Cl.: G08G 5/20, G01C 21/20, G08G 5/21, G08G 5/22, G08G 5/26, G08G 5/32, G08G 5/34, G08G 5/53, G08G 5/55

(54) **TRAJECTORY-BASED OPERATIONS FLIGHT PLAN SUBMISSION SYSTEMS AND METHODS**

(30) Priority: 02.04.2025 US 202519098341
(71) Applicant: The Boeing Company, Arlington, VA 22202 (US)
(72) Inventor: ROMANI DE OLIVEIRA, Italo, São José Dos Campos (BR); COSTAS ÁLVAREZ, Pablo, Majadahonda Madrid (ES); ALTUS, Stephen Solomon, Campbell (US); SÁNCHEZ BARBERÁN, Carlos, Las Rozas de Madrid (ES)
(74) Representative: Plasseraud IP

(57) **Abstract**

A system and a method include a control unit configured to receive a flight plan for an aircraft. The flight plan is in a first data standard. The control unit is further configured to convert the flight plan in the first data standard into the flight plan in a second data standard. The second data standard differs from the first data standard.

## Description

### FIELD OF THE DISCLOSURE

Examples of the present disclosure generally relate to trajectory-based operations flight plan submission systems and methods.

### BACKGROUND OF THE DISCLOSURE

Aircraft transport passengers and cargo between various locations. Numerous aircraft depart from and arrive at a typical airport every day.

Trajectory-Based Operations (TBO) is an air traffic management method that uses trajectories of aircraft to optimize flight planning and management. In TBO, a four-dimensional flight trajectory, collaboratively developed, negotiated, managed and shared, serves as a common reference for decision-making. In short, coordination and collaboration occur using the trajectory as the common plan for the flight.

Enablers for TBO include System Wide Information Management (SWIM), Connected Aircraft, Controller Pilot Data Link Communications (CPDLC), and Flight & Flow Information for a Collaborative Environment (FF-ICE), which is a configured to improve air traffic management. These elements contribute to synchronization of trajectories in a way that the same reference is available for all stakeholders during the flight planning and execution stages. TBO is implemented following the FF-ICE data standard, exchanged over the SWIM services architecture.

According to the International Civil Aviation Organization (ICAO), systems processing flight plans according to the FPL 2012 format are to be sunset when sufficient experience with FF-ICE/Release 1 (R1) is gained, and tools for deployment of full FF-ICE/R1 are in place. Before departure, processes established for FF-ICE/R1 are utilized to create an agreed trajectory, which serves as the foundation for a filed flight plan.

However, current flight planning system generate messages using a data standard that may differ from FF-ICE.

### SUMMARY OF THE DISCLOSURE

A need exists for a system and a method for converting flight plans in one type of data standard into another type of data standard, such as FF-ICE.

With that need in mind, certain examples of the present disclosure provide a system including a control unit configured to receive a flight plan for an aircraft. The flight plan is in a first data standard. The control unit is further configured to convert the flight plan in the first data standard into the flight plan in a second data standard. The second data standard differs from the first data standard.

In at least one example, the first data standard is one of extensible markup language (XML) or JavaScript Object Notation (JSON). In at least one example, the second data standard is Flight-and-Flow Information for Collaborative Environment (FF-ICE). As a further example, the control unit is further configured to submit the flight plan in the FF-ICE standard to an FF-ICE filing service, and interpret a reply from the FF-ICE filing service. In at least one example, the control unit is further configured to convert the flight plan in the first data standard into a flight information exchange model (FIXM) flight plan format by, at least in part, creating a globally unique flight identifier (GUFI).

The control unit can be configured to receive the flight plan in the first data standard from a computerized flight-plan system.

In at least one example, the system includes a user interface including a display and an input device. The control unit is in communication with the user interface. The control unit is further configured to show the flight plan in one or both of the first data standard or the second data standard on the display. The control unit can be further configured to show a route comparison on the display.

The system can also include a communication device coupled to the control unit. The control unit is configured to receive the flight plan in the first data standard and output the flight plan in the second data standard via the communication device.

The system can also include the aircraft. The aircraft is configured to be operated according to the flight plan in the second data standard.

Certain examples of the present disclosure provide a method including receiving, by a control unit, a flight plan for an aircraft, wherein the flight plan is in a first data standard; and converting, by the control unit, the flight plan in the first data standard into the flight plan in a second data standard, wherein the second data standard differs from the first data standard.

### BRIEF DESCRIPTION OF THE DRAWINGS

Figure 1 illustrates a block diagram of a system, according to an example of the present disclosure.
Figure 2 illustrates a flow chart of an FF-ICE conversion method, according to an example of the present disclosure.
Figure 3 illustrates a flow chart of an FIXM conversion method, according to an example of the present disclosure.
Figure 4 illustrates a flow chart of a create route trajectory group container method, according to an example of the present disclosure.
Figure 5 illustrates a flow chart of a method for identifying vertical profile elements, according to an example of the present disclosure.
Figure 6 illustrates a graph showing an FF-ICE vertical profile, according to an example of the present disclosure.
Figure 7 illustrates a graph showing an FF-ICE vertical profile, according to an example of the present disclosure.
Figure 8 illustrates a display showing an example of a route comparison string, according to an example of the present disclosure.
Figure 9 illustrates a display showing a route comparison, according to an example of the present disclosure.
Figure 10 illustrates a flow chart of a method, according to an example of the present disclosure.
Figure 11 illustrates a schematic block diagram of a control unit, according to an example of the present disclosure.
Figure 12 illustrates a perspective front view of an aircraft, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

Trajectory-Based Operations (TBO) aims at higher predictability of a four-dimensional trajectory of an aircraft. TBO generally requires that trajectories be filed in the flight plan messaging standard called "Flight-and-Flow Information for Collaborative Environment" (FF-ICE). As described herein, examples of the present disclosure convert current flight plan formats generated by computerized flight-plan Systems (CFS) to FF-ICE trajectories.

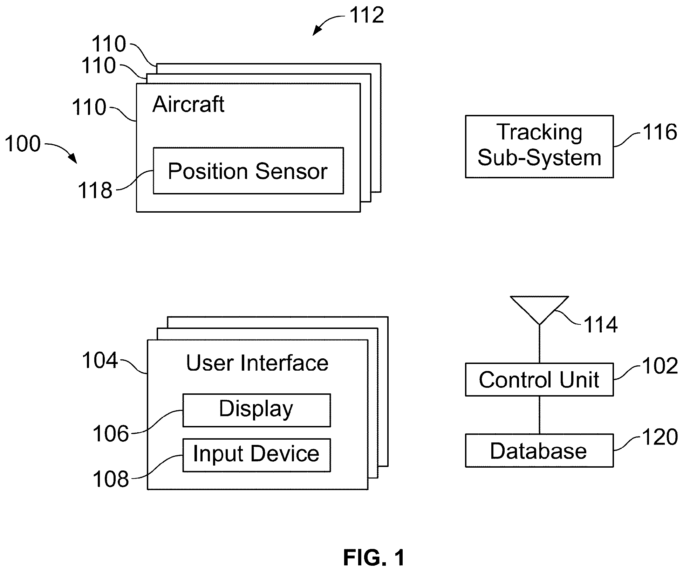

Figure 1 illustrates a block diagram of a system 100, according to an example of the present disclosure. The system 100 includes a control unit 102 in communication with a user interface 104, such as through one or more wired or wireless connections. The user interface 104 includes a display 106 and an input device 108. The display 106 can be a monitor, screen, television, touchscreen, and/or the like. The input device 108 can include a keyboard, mouse, stylus, touchscreen interface (that is, the input device 108 can be integral with the display 106), and/or the like. In at least one example, the control unit 102 and the user interface 104 are part of a computer workstation. The control unit 102 and the user interface 104 are commonly located. Optionally, the control unit 102 and be remotely located from the user interface 104. In at least one example, the one or more of the user interfaces 104 provide, or are part of, a flight planning computer system configured to provide flight plans for aircraft 110 within an air space 112. The flight planning computer system can include the control unit 102. Optionally, the control unit 102 can be separate and distinct from the flight planning computer system.

In at least one example, at least one of the aircraft 112 includes a user interface 104. For example, a user interface 104 can be in communication with and/or form a part of a flight computer of an aircraft 110. As another example, a user interface 104 can be part of a separate computer workstation aboard an aircraft 110. As another example, the user interface 104 can be a handheld device, such as a smart phone, tablet, or the like, within an aircraft 110. As another example, the user interface 104 can be located remotely from the aircraft 110, such as at an air traffic control location, a ground control location, a central monitoring center, and/or the like. A plurality of user interfaces 104 can be present, at the airports, within aircraft 110, at a central monitoring center remote from the airports, and/or the like.

The control unit 102 can be coupled to a communication device 114, such as one or more antennas, a transceiver, a radio, a network connection, and/or the like. The control unit 102 is configured to communicate with the aircraft 110 through the communication device 114. In at least one example, the control unit 102 is configured to receive a flight plan in a first data standard via the communication device 114. Further, the control unit 102 is configured to output the flight plan in a second data standard, which differs from the first standard, via the communication device 114. Optionally, the control unit 102 can communicate to other electronic systems, such as through one or more wired or wireless connections other than the communication device 114.

In at least one example, the control unit 102 can also be in communication with a tracking sub-system 116, such as through one or more wired or wireless connections. The control unit 102 and the tracking sub-system 116 can be co-located, such as at an airport, a central monitoring center, or the like. Optionally, the control unit 102 and the tracking sub-system 116 can be remotely located from one another, and in communication with one another through a private or public data network. As an example, the control unit 102 and the tracking sub-system 116 can be in communication with one another through the Internet, a cloud-based network, and/or the like.

Position signals indicative of locations of the aircraft 110 are output by the position sensors 118. In at least one example, the position signals output by the position sensors 118 of aircraft 110 are automatic dependent surveillance-broadcast (ADS-B) signals, which are tracked by the tracking sub-system 116. The position sensors 118 output signals indicative of one or more of the position, altitude, heading, acceleration, velocity, and/or the like of the aircraft 110. In at least one example, the position sensors 118 outputs data directly to the control unit 102, instead of to the tracking sub-system 116. In at least one example, the system 100 does not include the tracking sub-system 116.

In at least one example, the user interface 104 is operated to generate a flight plan for one or more of the aircraft 110. For example, the input device 108 can be operated to allow for the flight plan to be input and received by the control unit 102. The flight plan is in a first data standard, such as in a propriety internal format. The control unit 102 receives the flight plan in the first data standard, and converts the first data standard into a second data standard, which differs from the first data standard. That is, the control unit 102 converts the flight plan in the first data standard into flight plan in the second data standard. In at least one example, the second data standard is FF-ICE, such as FF-ICE/R1. After converting the flight plan into the second data standard, the control unit 102 outputs the flight plan in the second standard, via the communication device 114, to one or more of the aircraft 110, user interfaces 104 at other locations, such as air traffic control, and the like. An aircraft 110 is operated to fly according to the flight plan, and tracked by the tracking sub-system 116. In at least one example, the aircraft 110 is automatically operated (such as by an auto-pilot system, the control unit 102, or the like) according to the flight plan.

As described herein, the control unit 102 is configured to receive a flight plan for an aircraft 110. The flight plan includes a path, waypoints, altitudes, airspeeds, and the like for various phases (including takeoff, cruise, landing, etc.) of the aircraft 110 from a departure location (for example, a first airport) to an arrival location (for example, a second airport). The flight plan as initially received by the control unit 102 (such as from a flight planning computer) is in a first data standard. The control unit 102 is further configured to convert the flight plan in the first data standard into the flight plan in a second data standard, which differs from the first data standard.

In at least one example, the control unit 102 is configured to convert the flight plan into the second data standard in relation to predeparture data exchanges (FF-ICE/R1). A flight planning computer system that generates a flight plan may not have the ability of generating FF-ICE flight plans. As such, the control unit 102 converts the flight plan as generated by the flight planning computer system (such as within a first data standard) into the second data standard, namely FF-ICE. The control unit 102 converts a flight plan generated by a conventional flight planning system, which can be in any of several existing operational flight plan formats, to the FF-ICE standard. In at least one example, after the converting the flight plan into the FF-ICE standard, the control unit 102 then submits the flight plan in the FF-ICE standard to an FF-ICE filing service, and interprets a reply from the FF-ICE filing service. If a flight plan change is proposed in the reply, the control unit 102 is configured to understand the change.

In at least one example, the control unit 102 first converts airline operational flight plans (OFPs) from one format to another. The converted flight plan retains the essential features of the original flight, and does not contradict the original flight plan. The control unit 102 is configured to receive any OFP having a format that is formally defined by a schema definition. That is, the first data standard has a schema definition. Examples of the first data standard include extensible markup language (XML), JavaScript Object Notation (JSON), Plain Text (TXT), or Portable Document Format (PDF). Examples of the schema definition (that is, the first data standard) include ARINC 633 (A633), which is XML-based, X12 (XML-based), and sulu-schema (JSON-based).

In at least one example, a flight plan in a first data standard (for example, an OFP) is first received by the control unit 102, which initially checks if the flight plan in the first data standard follows a recognized schema definition. The schema definition can be explicitly indicated within the flight plan in the first data standard, but the control unit 102 can detect the schema definition implicitly by content of the data, for example. If the schema definition (that is, the first data standard) is not identified, not detected, or not among a list of accepted schemas, the control unit 102 outputs a message to the user interface 104 (for example, the flight planning computer system) indicating that the flight plan in the first data standard is in an invalid schema. If, however, the first data standard is valid, the control unit 102 saves the flight plan in the first data standard within a database 120 (such as an intake database). The database 120 serves as a buffer in the event downstream conversion cannot keep up with an arrival rate of the flight plan, and/or if the downstream conversion process becomes unavailable for whatever reason.

After the control unit 102 receives the flight plan in the first data standard and stores the flight plan in the first data standard (such as in the database 120), the control unit 102 un-marshals the flight plan in the first data standard. In particular, the control unit 102 converts the flight plan in the first data standard to one or more in-memory object-oriented data structures, encapsulated in a specific flight plan object. Various types of specific flight plan objects have several data items in common, but are not of the same class, so, they need an additional processing step to be converted to a common flight plan object. The control unit 102 converts the flight plan in the first data standard into a common-class object, in which various flight plan data items are extracted in different ways, according to the specific flight plan object available.

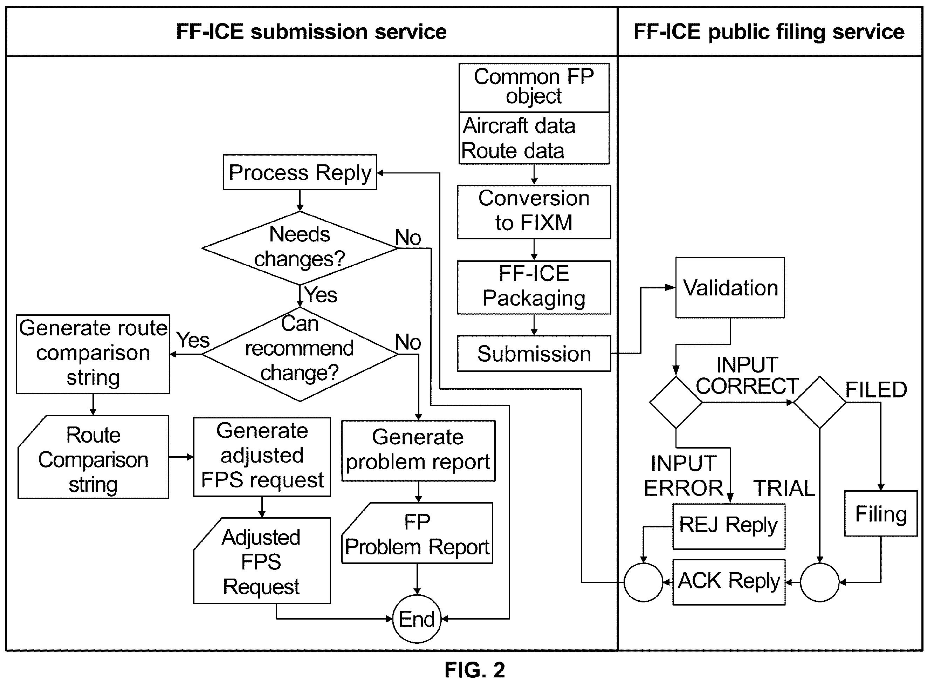

Figure 2 illustrates a flow chart of an FF-ICE conversion method, according to an example of the present disclosure. Referring to Figures 1 and 2, after the control unit 102 loads a common flight plan object ("common FP object"), the control unit 102 can the generate an FF-ICE plan request. For example, the control unit 102 generates the flight plan in a format called flight information exchange model (FIXM), and packages the flight plan in FIXM in a request message according to FF-ICE, which the control unit 102 submits to an airspace authority's FF-ICE filing system ("FF-ICE public filing service"), and a reply therefrom is processed. The FF-ICE reply may contain anomalies (for example, problems) identified in the flight plan, a case called NON_CONCUR, or a new trajectory proposed by the airspace authority, which is not mandatory, but preferred. This type of reply is called NEGOTIATE (or optionally NEGOTATION). In either case, a process reply step uses knowledge of rules of the computerized flight-plan system (CFS) to try to recommend a change and generate an adjusted FPS request, which feed-back to the CFS for a new round of submission.

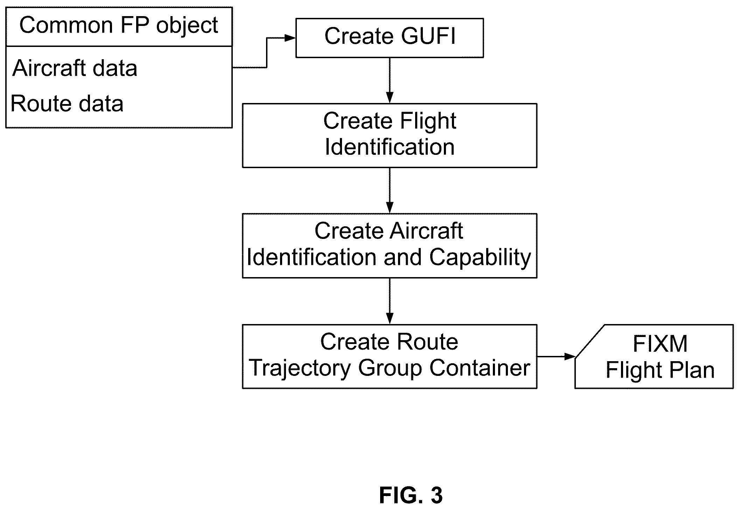

Figure 3 illustrates a flow chart of an FIXM conversion method, according to an example of the present disclosure. Referring to Figures 1-3, as noted, the control unit 102 converts the flight plan in the first data standard into an FIXM flight plan format. To convert to the FIXM flight plan format, the control unit 102 first creates a globally unique flight identifier (GUFI), which is a random key that, by international guidelines on its creation, and the force of probabilities, will not duplicate with any other GUFI in the world.

The control unit 102 creates objects according to FIXM standard classes, grouped by affinity by creating flight identification, which includes objects of objects containing the GUFI, flight identification fields, and flight category, according to the ICAO standard. Next, the control unit 102 creates aircraft identification and capabilities, which include objects containing aircraft identification information, including registration number, and communication, navigation and surveillance equipment. Next, the control unit 102 creates a route trajectory group, which includes a route trajectory group object.

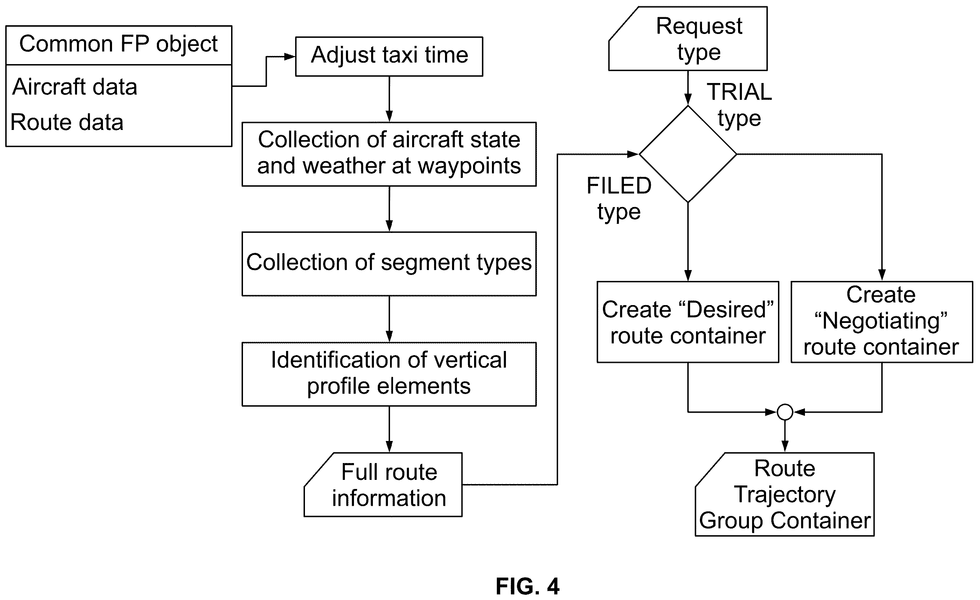

Figure 4 illustrates a flow chart of a create route trajectory group container method, according to an example of the present disclosure. Referring to Figures 1 and 4, the control unit 102 extracts full route information from the flight plan. In particular, the control unit 102 first adjusts a taxi time to meet the FF-ICE specification, which is between 1 and 90 minutes. The common FP object can include route data indicating 0 (zero) for taxi time, because the taxi time is negligible among all the uncertainties surrounding a total flight time. In these cases, the control unit 102 outputs the minimum of 1 minute. If the taxi time is larger than a maximum allowed, it is likely due to an error, and the control unit 102 can output an exception with an error message to the user interface 104 or to a caller function.

The control unit 102 collects information from waypoints in the route data portion of the common FP Object. The control unit 102 collects aircraft state variables (for example, geo position, altitude, speed, etc.) and weather variables (for example, wind vector and temperature), and then collects segment types between the waypoints which, in FF-ICE may be one of SID, Airway, Direct and SID. Next, the control unit 102 identifies vertical profile elements, which are used to correctly identify events and segments in the flight vertical profile. These elements are either waypoint properties or route change indicators. The FF-ICE waypoint properties relevant for the vertical profile include TCP_VERTICAL (TCP-V), TOP_OF_CLIMB (TOC), and TOP_OF_DESCENT (TOD). TCP stands for trajectory change point, which is a point at which the flight was leveled and starts climbing, the flight was descending and levels-off, or the flight was leveled and starts descending. In a specific case of the latter case, where the altitude is the highest in the whole flight, the property is not TCP-V, but TOD. A TOC is any point where the trajectory was climbing and then levels-off.

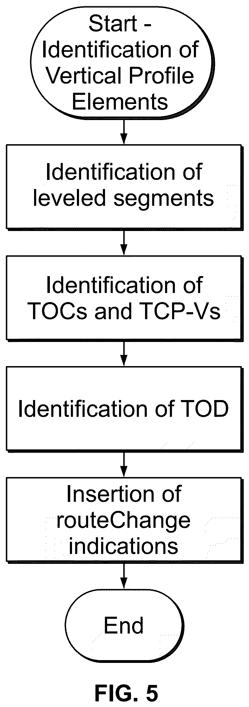

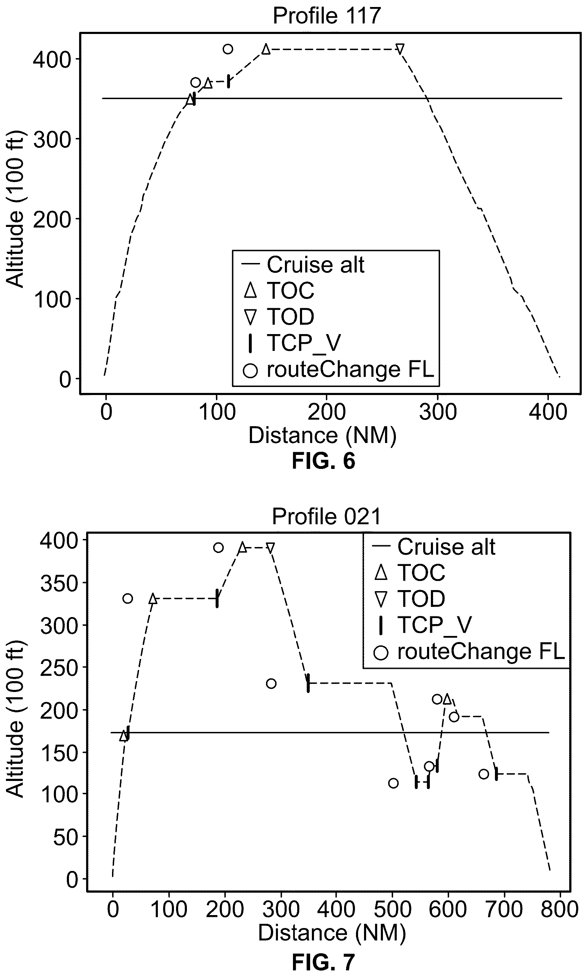

Figure 5 illustrates a flow chart of a method for identifying vertical profile elements, according to an example of the present disclosure. Figure 6 illustrates a graph showing an FF-ICE vertical profile, according to an example of the present disclosure. Figure 7 illustrates a graph showing an FF-ICE vertical profile, according to an example of the present disclosure. Referring to Figures 1 and 5-7, route change indicators are advance indications of leveled flight segments resulting from departing from the initial cruise altitude, or departing from any altitude of a subsequent leveled segment. The control unit 102 identifies leveled segments by comparing the altitudes of neighboring waypoints and grouping them by equal altitudes. The control unit 102 identifies TOCs and TCP-Vs by analyzing the limit points of the leveled segments. The control unit 102 identifies TOD by finding the highest TCP-V that starts a descending segment. The control unit 102 inserts route change at points that precede leveled segments, respecting the following rules: (a) the route change indication is at an existing, published waypoint, not any random point defined by latitude/longitude, which is to be a designated point; (b) there is not any other level segment (with altitude different than the current) between the candidate designated point and the target TOC or bottom of descent (BOD) (for example, there is no other TOC or BOD between the candidate designated point and the target TOC or BOD), and (c) the first cruise altitude is indicated by a single FF-ICE field called cruising level, not requiring a route change indication, while all the subsequent leveled segments resulting from altitude changes correspond to one route change indication. Figures 6 and 7 show examples of resulting flight profiles with route change indications.

In at least one example, the control unit 102 creates a route trajectory group container. The type of FF-ICE request to be created defines the type of route trajectory group container, which contains the route information. If the request is of a trial type, the group container will be of a "Desired" type. If the request is of a filed type, the group container will be of the "Negotiating" type. Although the route trajectory group container is still part of the FIXM object, and this object's class definition is not part of the FF-ICE standard, this type of distinction may be imposed by Eurocontrol acceptance rules, for example.

The control unit 102 packages the FIXM object packaged in a FF-ICE request message. The present implementation allows requests of trial and filed type, which are the most commonly used in the current development stage of FF-ICE, but the control unit 102 can be configured to allow an update request type, which modifies an already filed plan.

Referring to Figures 1 and 2, the control unit 102 submits the FF-ICE request to the public filing service (for example, Eurocontrol NM B2B), which parses the request and validates the flight plan information, which determines whether i) the input data fields are in the correct format; ii) the flight plan is compliant with logical FF-ICE rules (for example, flight level change indications); iii) the plan respects airspace constraints; and iv) the airspace capacity can accommodate the flight at the requested time. If criteria (i) or (ii) fail, the reply message will indicate that the flight plan has an error and will return a reply message with submission status REJ (rejected). Otherwise, the reply message will have the ACK (acknowledged) status, which means that the information can be correctly processed.

If criterion (iii) fails, the reply will have the planning status NON_CONCUR. If checking criterion (iv) results in excess demand, the filing service network-wide planning engine will suggest flight plan modifications in the reply, to be marked with the planning status NEGOTIATE. If the request is of TRIAL type, these responses are sent to the user for information purpose. On the other hand, if the request is of FILED type, the flight plan will be actually filed by the public service and begin to exist as an actual flight.

After the control unit 102 receives the FF-ICE reply, the control unit 102 checks its submission status and planning status, such as in "Process reply" in Figure 2. If the submission status is ACK, the control unit 102 checks the planning status. If the planning status is CONCUR, the flight plan does not need changes (Needs Changes = NO), because the flight plan was accepted by the public filing service. A message of acceptance is shown on the display 106 of the user interface 104, and the process ends. Alternatively, if the planning status is NEGOTIATE, it means that changes are needed (Needs Changes = YES) and recommended (Can recommend change = YES), because the FF-ICE reply contains an alternative flight plan, which can be parsed and used to "generate adjusted FPS request".

If the planning status is NON_CONCUR, the present development stage leads to the case in which changes are not recommended (Can recommend change = NO), because there is no alternative route provided by the public filing service. In these cases, the FF-ICE reply contains one or more explanatory messages on the reasons for NON_CONCUR.

If the submission status of the FF-ICE reply is REJ, the flight plan requires changes (Needs changes = YES). The error message associated to the REJ status is shown on the display 106.

In at least one example, the control unit 102 handles the alternative flight plan provided in the reply under the planning status NEGOTIATE. For example, the control unit 102 first un-marshals the FIXM flight plan embedded in the FF-ICE reply, then compares this plan with the in-memory FIXM object that was contained in the FF-ICE request. The control unit 102 compares the departure time and a main cruise speed and altitude, which are usually the first cruise altitude and speed of the flight, and then compares the waypoints between the routes. The waypoint comparison is done within the generate route comparison string process of Figure 2, by comparing the waypoints of the request route with those of the reply route, and generating a string that indicates the differences between them. The control unit 102 iterates through the waypoints of both routes, collecting data and identifying differences. For each waypoint in the request route, the control unit 102 checks if there is a corresponding match in the reply route. If there is a match, the waypoint's identifier, type, and altitude are noted. If there is no match, the control unit 102 checks if the reply waypoint is part of a standard instrument departure (SID), standard terminal arrival route (STAR), or airway, and, if so, eliminates the reply waypoint. If not, the waypoint is added to the route. Extended checks are performed to handle cases where the reply route has additional waypoints or different sub-routes.

After collecting and comparing the waypoints, the control unit 102 generates the comparison string. The control unit 102 sorts the waypoints in the reply route and constructs the comparison string by iterating through the sorted waypoints. Waypoints that are in the reply route but not in the request route are prefixed with a "+" character, while those in the request route but not in the reply route are appended to the end of the route string with a "\" character. A similar logic indicates whether a SID and/or a STAR was preserved, added or removed. The final comparison string is then returned, providing a concise summary of the differences between the two routes.

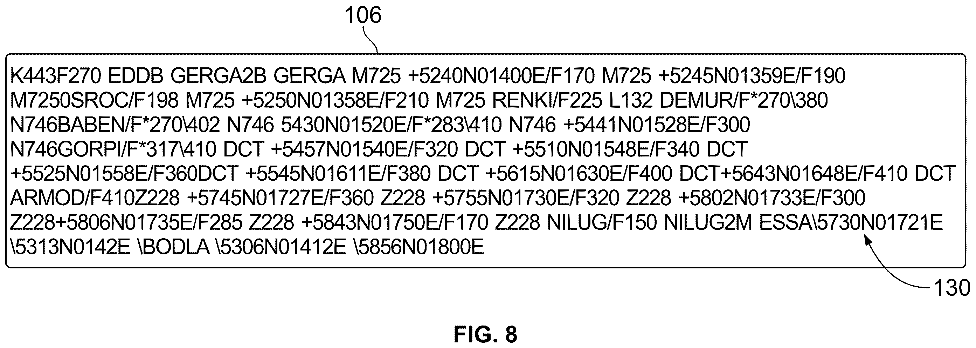

Figure 8 illustrates a display 106 showing an example of a route comparison string 130, according to an example of the present disclosure. Referring to Figures 1, 2, and 8, within the route comparison string 130, "+" indicates that the waypoint has been inserted in the reply, "*" indicates a changed altitude or speed, and "\" indicates removed waypoint or old altitude. The control unit 102 shows the route comparison string 130 on the display 106. The control unit 102 further uses the route comparison string 130 to generate an adjusted FPS request, as shown in Figure 2, which is an input specification to the airline FPS to generate a new flight plan. The adjusted FPS request includes a new required route, which is obtained from the route comparison string, by eliminating the difference indicators and generating the required route string in the format ICAO FPL2012, which is understood by most of the computerized flight-plan systems. This string includes the departure time (whether or not it has changed), aircraft equipment specification, and aircraft performance specification, resulting in an adjusted FPS request, which can be fed back to the flight planning system.

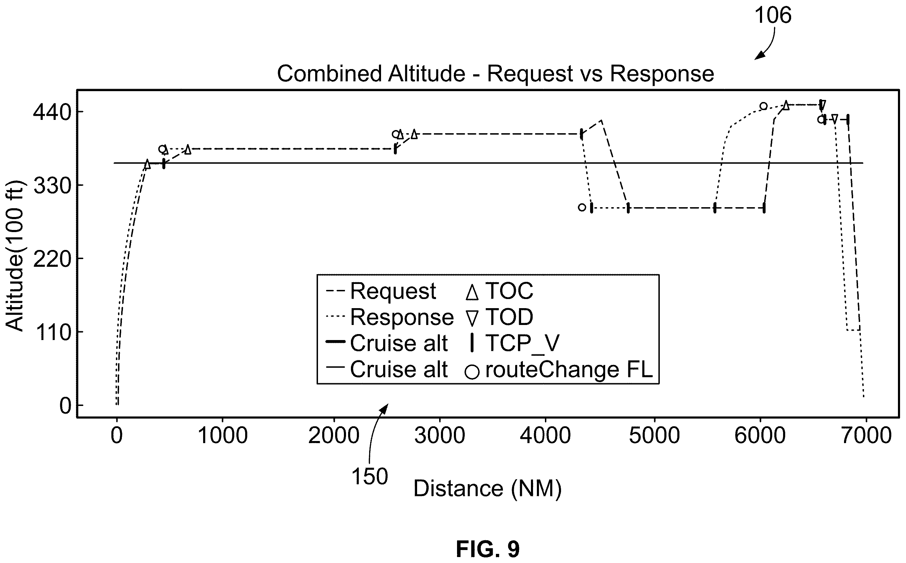

Figure 9 illustrates a display 106 showing a route comparison 150 between a route generated, according to an example of the present disclosure, submitted to the public FF-ICE filing service, and the NEGOTIATE route replied by such filing service. Referring to Figures 1 and 9, the control unit 102 can show the route comparison 150 in graphical form.

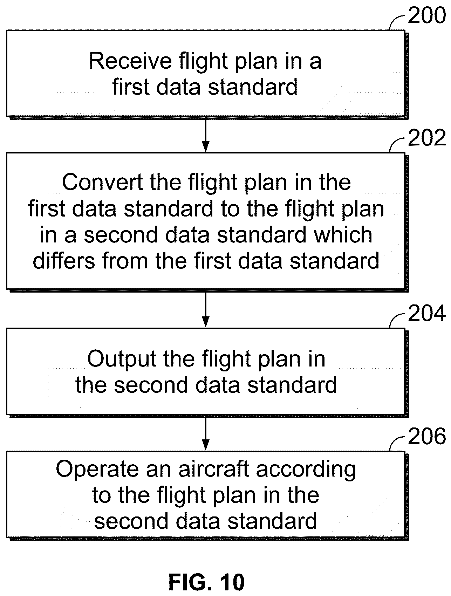

Figure 10 illustrates a flow chart of a method, according to an example of the present disclosure. Referring to Figures 1 and 10, at 200, the control unit 102 receives a flight plan in a first data standard. At 202, the control unit 102 converts the flight plan in the first data standard to the flight plan in a second data standard which differs from the first data standard. At 204, the control unit 102 outputs an electronic signal including the flight plan in the second data standard. The flight plan in the FF-ICE data standard is received by one or more entities, such as one or more aircraft, air traffic control, a public filing service, and/or the like. At 206, an aircraft 110 is operated according to the flight plan in the second data standard.

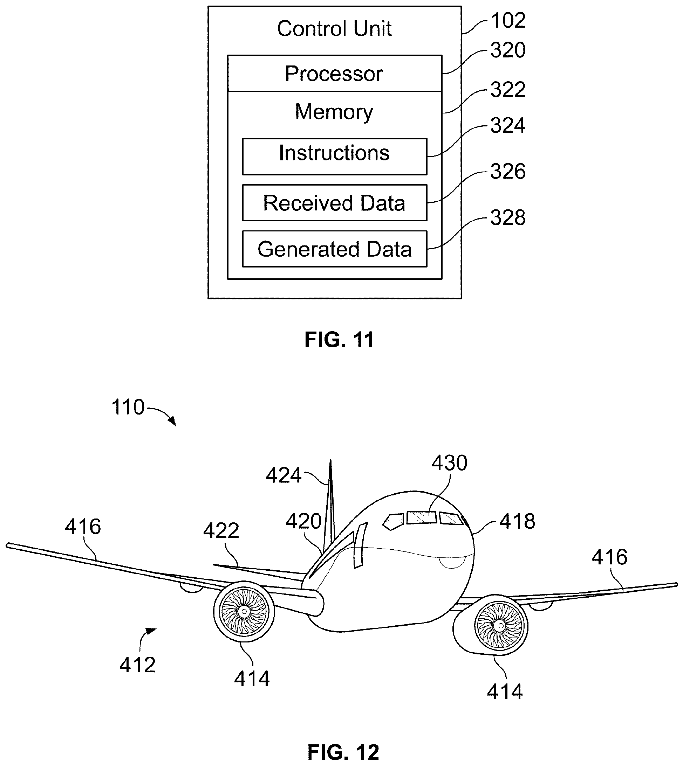

Figure 11 illustrates a schematic block diagram of the control unit 102, according to an example of the present disclosure. In at least one example, the control unit 102 includes at least one processor 320 in communication with a memory 322. The memory 322 stores instructions 324, received data 326, and generated data 328. The control unit 102 shown in Figure 11 is merely exemplary, and non-limiting.

As used herein, the term "control unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the control unit 102 may be or include one or more processors that are configured to control operation, as described herein.

The control unit 102 is configured to execute a set of instructions that are stored in one or more data storage units or elements (such as one or more memories), in order to process data. For example, the control unit 102 may include or be coupled to one or more memories. The data storage units may also store data or other information as desired or needed. The data storage units may be in the form of an information source or a physical memory element within a processing machine.

The set of instructions may include various commands that instruct the control unit 102 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the control unit 102. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control unit 102 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include aspects of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

Referring to Figures 1-11, examples of the subject disclosure provide systems and methods that allow large amounts of data to be quickly and efficiently analyzed by a computing device. For example, the control unit 102 analyzes a flight plan in a data standard, which may not be readily discernable by human beings, and automatically converts the flight plan into a different data standard. As such, large amounts of data, which may not be readily discernable by human beings, are being tracked and analyzed. The vast amounts of data are efficiently organized and/or analyzed by the control unit 102, as described herein. The control unit 102 analyzes the data in a relatively short time in order to automatically (without human intervention), quickly. and efficiently convert the flight plan into a different data standard. As such, examples of the present disclosure provide increased and efficient functionality, and vastly superior performance in relation to a human being analyzing the vast amounts of data.

In at least one example, components of the system 100, such as the control unit 102, provide and/or enable a computer system to operate as a special computer system for converting flight plans into a different data standard. The control unit 102 improves upon standard computing devices by providing such flight plans in an efficient and effective manner.

In at least one example, all or part of the systems and methods described herein may be or otherwise include an artificial intelligence (AI) or machine-learning system that can automatically perform the operations of the methods also described herein. For example, the control unit 102 can be an artificial intelligence or machine learning system. These types of systems may be trained from outside information and/or self-trained to repeatedly improve the accuracy with how data is analyzed to convert the data into a different standard. Over time, these systems can improve by determining and communicating with increasing accuracy and speed, thereby significantly reducing the likelihood of any potential errors. For example, the AI or machine-learning systems can learn and determine models, and associate such models with various aspects of flight plans. The AI or machine-learning systems described herein may include technologies enabled by adaptive predictive power and that exhibit at least some degree of autonomous learning to automate and/or enhance pattern detection (for example, recognizing irregularities or regularities in data), customization (for example, generating or modifying rules to optimize record matching), and/or the like. The systems may be trained and re-trained using feedback from one or more prior analyses of the data, ensemble data, and/or other such data. Based on this feedback, the systems may be trained by adjusting one or more parameters, weights, rules, criteria, or the like, used in the analysis of the same. This process can be performed using the data and ensemble data instead of training data, and may be repeated many times to repeatedly improve the determinations and communications described herein. The training minimizes conflicts and interference by performing an iterative training algorithm, in which the systems are retrained with an updated set of data, and based on the feedback examined prior to the most recent training of the systems. This provides a robust analysis model that can readily convert flight plans in an extremely fast, cost effective, and efficient manner.

In one example, the control unit 102 includes or represents an artificial neural network (ANN) that identifies patterns in the visual, vectoral, or vector space representations of data, classifies the patterns (e.g., assigns a class to an identified pattern, such as class #1, class #2, and so on) based on the contents of the patterns that are identified, and identifies aspects of flight plans based on the classifications. The ANN can be realized through software, hardware, or a combination of software and hardware. The structure of the ANN can be a series of layers, with each layer including one or more artificial neurons arranged in one or more neuron arrays. Each of these neurons may include or represent a register, a microprocessor, and at least one input. Each neuron can produce an output, or activation, based on an activation function that uses the outputs of the previous layer and a set of weights as inputs. Each neuron in a neuron array can be connected to another neuron in the same layer or in another layer via one or more synaptic circuits. A synaptic circuit may include a memory for storing a synaptic weight. One example of this ANN may be a deep neural network having an input layer, an output layer, and a plurality of fully connected hidden layers. In some examples, the ANN (e.g., the control unit 102) can be implemented by an application-specific integrated circuit (ASIC) specially customized for the specific artificial intelligence application described herein and provide superior computing capabilities and reduced electricity consumption compared to traditional computers.

Training data can be generated by receiving continuous data at the control unit 102 and using the control unit 102 to discretize the continuous data. Optionally, the control unit 102 can be trained with a pretrained model. The training data or pretrained model may be received by the control unit 102 remotely over one or more networks. The training data may be historical data, which the neural network can use to learn patterns in the visual representations of the data to identify or detect the same (or similar) patterns in other data. The trained ANN monitors additional visual representations of data to identify patterns and classify the patterns. If the trained ANN detects one or more patterns, the trained ANN can classify the pattern(s) to generate classification data which can be output to a user and/or used to re-train the ANN.

The ANN of the control unit 102 can continue to learn to improve identification of patterns in data visualizations, as well as improve the classification of the identified patterns. This continued learning can occur by, for example, changing the output generated by one or more of the neurons responsive to receiving the same input (e.g., a neuron produces a different output after the change), changing the activation function of one or more neurons, changing one or more of the weights, and/or changing one or more of the connections between the neurons (or which neurons are connected with each other). Changing one or more of these factors can cause the ANN to produce a different output (e.g., a different pattern is identified and/or a different classification is selected) than prior to the change.

Figure 12 illustrates a perspective front view of an aircraft 110, according to an example of the present disclosure. The aircraft 110 includes a propulsion system 412 that includes engines 414, for example. Optionally, the propulsion system 412 may include more engines 414 than shown. The engines 414 are carried by wings 416 of the aircraft 110. In other examples, the engines 414 may be carried by a fuselage 418 and/or an empennage 420. The empennage 420 may also support horizontal stabilizers 422 and a vertical stabilizer 424. The fuselage 418 of the aircraft 110 defines an internal cabin 430, which includes a flight deck or cockpit, one or more work sections (for example, galleys, personnel carry-on baggage areas, and the like), one or more passenger sections (for example, first class, business class, and coach sections), one or more lavatories, and/or the like. Figure 12 shows an example of an aircraft 110. It is to be understood that the aircraft 110 can be sized, shaped, and configured differently than shown in Figure 12.

Also provided are the following illustrative, non-exhaustive examples of the subject-matter encompassed herein, which relate to:

A system comprising: a control unit configured to: receive a flight plan for an aircraft, wherein the flight plan is in a first data standard, and convert the flight plan in the first data standard into the flight plan in a second data standard, wherein the second data standard differs from the first data standard.

The system described in the immediately preceding paragraph, wherein the first data standard is one of extensible markup language (XML). JavaScript Object Notation (JSON), Plain Text (TXT), or Portable Document Format (PDF).

The system described in the first of the two immediately preceding paragraphs, wherein the second data standard is Flight-and-Flow Information for Collaborative Environment (FF-ICE).

The system described in the immediately preceding paragraph, wherein the control unit is further configured to submit the flight plan in the FF-ICE standard to an FF-ICE filing service, and interpret a reply from the FF-ICE filing service.

The system described in the any of the four immediately preceding paragraphs, wherein the control unit is further configured to convert the flight plan in the first data standard into a flight information exchange model (FIXM) flight plan format by, at least in part, creating a globally unique flight identifier (GUFI).

The system described in the any of the five immediately preceding paragraphs, wherein the control unit is configured to receive the flight plan in the first data standard from a computerized flight-plan system.

The system described in the any of the six immediately preceding paragraphs, further comprising a user interface including a display and an input device, wherein the control unit is in communication with the user interface, and wherein the control unit is further configured to show the flight plan in one or both of the first data standard or the second data standard on the display.

The system described in the immediately preceding paragraph, wherein the control unit is further configured to show a route comparison on the display.

The system described in the any of the eight immediately preceding paragraphs, further comprising a communication device coupled to the control unit, wherein the control unit is configured to receive the flight plan in the first data standard and output the flight plan in the second data standard via the communication device.

The system described in the any of the nine immediately preceding paragraphs, further comprising the aircraft, wherein the aircraft is configured to be operated according to the flight plan in the second data standard.

A method comprising: receiving, by a control unit, a flight plan for an aircraft, wherein the flight plan is in a first data standard; and converting, by the control unit, the flight plan in the first data standard into the flight plan in a second data standard, wherein the second data standard differs from the first data standard.

The method described in the immediately preceding paragraph, wherein the first data standard is one of extensible markup language (XML). JavaScript Object Notation (JSON), Plain Text (TXT), or Portable Document Format (PDF), and wherein the second data standard is Flight-and-Flow Information for Collaborative Environment (FF-ICE).

The method described in the immediately preceding paragraph, further comprising: submitting, by the control unit, the flight plan in the FF-ICE standard to an FF-ICE filing service; and interpreting, by the control unit, a reply from the FF-ICE filing service.

The method described in the any of the three immediately preceding paragraphs, further comprising converting, by the control unit, the flight plan in the first data standard into a flight information exchange model (FIXM) flight plan format by, at least in part, creating a globally unique flight identifier (GUFI).

The method described in the any of the four immediately preceding paragraphs, wherein said receiving comprises receiving the flight plan in the first data standard from a computerized flight-plan system.

The method described in the any of the five immediately preceding paragraphs, further comprising showing, by the control unit, the flight plan in one or both of the first data standard or the second data standard on a display of a user interface.

The method described in the immediately preceding paragraph, further comprising showing, by the control unit, a route comparison on the display.

The method described in the any of the seven immediately preceding paragraphs, further comprising operating the aircraft according to the flight plan in the second data standard.

A system comprising: an aircraft; a user interface including a display and an input device; and a control unit in communication with the user interface, wherein the control unit is configured to: receive, from a computerized flight-plan system, a flight plan for the aircraft, wherein the flight plan is in a first data standard, wherein the first data standard is one of extensible markup language (XML), JavaScript Object Notation (JSON), Plain Text (TXT), or Portable Document Format (PDF), convert the flight plan in the first data standard into the flight plan in a second data standard, wherein the second data standard differs from the first data standard, wherein the second data standard is Flight-and-Flow Information for Collaborative Environment (FF-ICE), show the flight plan in one or both of the first data standard or the second data standard on the display, show a route comparison on the display, submit the flight plan in the second standard to an FF-ICE filing service, and interpret a reply from the FF-ICE filing service, wherein the aircraft is configured to be operated according to the flight plan in the second data standard.

The system described in the immediately preceding paragraph, wherein the control unit is further configured to convert the flight plan in the first data standard into a flight information exchange model (FIXM) flight plan format by, at least in part, creating a globally unique flight identifier (GUFI).

As described herein, examples of the present disclosure provide systems and methods for converting flight plans in one type of data standard into another type of data standard, such as FF-ICE.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the appended claims, and can include other examples that occur to those skilled in the art.

## Claims

1. A method comprising:
receiving, by a control unit (102), a flight plan for an aircraft 110), wherein the flight plan is in a first data standard; and
converting, by the control unit (102), the flight plan in the first data standard into the flight plan in a second data standard, wherein the second data standard differs from the first data standard.

2. The method of claim 1, wherein the first data standard is one of extensible markup language (XML), JavaScript Object Notation (JSON), Plain Text (TXT), or Portable Document Format (PDF).

3. The method of any one of claims 1 - 2, wherein the second data standard is Flight-and-Flow Information for Collaborative Environment (FF-ICE).

4. The method of claim 3, further comprising:
submitting, by the control unit (102), the flight plan in the FF-ICE standard to an FF-ICE filing service; and
interpreting, by the control unit (102), a reply from the FF-ICE filing service.

5. The method of claim 1, further comprising converting, by the control unit (102), the flight plan in the first data standard into a flight information exchange model (FIXM) flight plan format by, at least in part, creating a globally unique flight identifier (GUFI).

6. The method of claim 1, wherein said receiving comprises receiving the flight plan in the first data standard from a computerized flight-plan system (100).

7. The method of claim 1, further comprising showing, by the control unit (102), the flight plan in one or both of the first data standard or the second data standard on a display (106) of a user interface (104).

8. The method of claim 7, further comprising showing, by the control unit (102), a route comparison (150) on the display (106).

9. The method of claim 1, further comprising operating the aircraft 110) according to the flight plan in the second data standard.

10. A system (100) comprising a control unit (102) configured to implement a method according to any of claims 1 - 9.

11. The system (100) of claim 10, further comprising a user interface (104) including a display (106) and an input device (108), wherein the control unit (102) is in communication with the user interface (104), and wherein the control unit (102) is further configured to show the flight plan in one or both of the first data standard or the second data standard on the display (106).

12. The system (100) of claim 10, further comprising a communication device (114) coupled to the control unit (102), wherein the control unit (102) is configured to receive the flight plan in the first data standard and output the flight plan in the second data standard via the communication device (114).

13. The system (100) of claim 10, further comprising the aircraft (110), wherein the aircraft (110) is configured to be operated according to the flight plan in the second data standard.

14. A computer program comprising instructions which, when the program is executed by a control unit (102) of a system (100), cause the system (100) to implement a method according to any of claims 1 to 9.

15. A computer-readable medium comprising instructions which, when executed by a control unit (102) of a system (100), cause the system (100) to implement a method according to any of claims 1 to 9.
